(19) **Europäisches Patentamt**
**European Patent Office**
**Office européen des brevets**

(11) **EP 3 228 595 B1**

(12) **EUROPEAN PATENT SPECIFICATION**

(45) Date of publication and mention
of the grant of the patent:
**27.03.2019 Bulletin 2019/13**

(21) Application number: **15865101.8**

(22) Date of filing: **01.12.2015**

(51) Int Cl.:
*C01G 53/00* (2006.01)     *H01M 4/505* (2010.01)
*H01M 4/525* (2010.01)     *H01M 10/0525* (2010.01)
*H01M 4/02* (2006.01)

(86) International application number:
**PCT/JP2015/083805**

(87) International publication number:
**WO 2016/088775 (09.06.2016 Gazette 2016/23)**

(54) **NICKEL LITHIUM METAL COMPOSITE OXIDE PRODUCTION METHOD, NICKEL LITHIUM METAL COMPOSITE OXIDE OBTAINED BY PRODUCTION METHOD, AND CATHODE ACTIVE MATERIAL INCLUDING SAME**

NICKEL-LITHIUM-METALLMISCHOXID-HERSTELLUNGSVERFAHREN, MIT DEM HERSTELLUNGSVERFAHREN HERGESTELLTES NICKEL-LITHIUM-METALLMISCHOXID UND KATHODENAKTIVMATERIAL DAMIT

PROCÉDÉ DE PRODUCTION D'OXYDE COMPOSITE MÉTALLIQUE DE LITHIUM ET DE NICKEL, OXYDE COMPOSITE MÉTALLIQUE DE LITHIUM ET DE NICKEL OBTENU PAR LE PROCÉDÉ DE PRODUCTION ET MATÉRIAU ACTIF DE CATHODE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2014 JP 2014244059**

(43) Date of publication of application:
**11.10.2017 Bulletin 2017/41**

(73) Proprietor: **Umicore
1000 Brussels (BE)**

(72) Inventors:
• **INUI, Kanichiro
Minamata-shi
Kumamoto 867-0053 (JP)**

• **FUKUURA, Tomomi
Minamata-shi
Kumamoto 867-0053 (JP)**
• **SATO, Soichiro
Minamata-shi
Kumamoto 867-0053 (JP)**

(74) Representative: **Gulde & Partner
Patent- und Rechtsanwaltskanzlei mbB
Wallstraße 58/59
10179 Berlin (DE)**

(56) References cited:
**WO-A1-2008/155989      JP-A- 2013 143 358
US-A1- 2007 254 214      US-A1- 2009 194 734
US-A1- 2013 299 735**

**Description**

[Technical Field]

The present invention relates to a method of manufacturing a lithium nickel composite oxide, a lithium nickel composite oxide obtained using the same manufacturing method, a positive electrode active material obtained from the same composite oxide, and a lithium ion battery positive electrode and a lithium ion battery including the positive electrode active material.

[Background Art]

Information terminal devices such as a personal computer or a mobile phone which can be portably used outdoors becoming widespread largely depends on the introduction of a small, light-weight, and high-capacity battery. As hybrid vehicles have become widely used, the demand for a vehicle-mounted battery having high performance and high safety and durability has increased. In addition, recently, the practical application of an electric vehicle (EV), which has been questioned in the related art, has been realized along with reduction in size and an increase in capacity of a battery mounted on an electric vehicle. Many research and study institutions have already entered into technical development of a battery to be mounted on an information terminal device or a vehicle, in particular, a lithium ion battery, and intense competition has arisen. Market competition in information terminal devices, hybrid vehicles, or EVs has become severe. Therefore, currently, a lower-cost lithium ion battery is strongly required, and there is a problem in a balance between quality and cost.

Examples of means for reducing the manufacturing cost of a final industrial product include cost reduction for members or materials constituting the product. In a lithium ion battery, cost reduction for each of a positive electrode, a negative electrode, an electrolyte, and a separator, which are essential members of the lithium ion battery, may be considered. Among these, the positive electrode is a member in which a lithium-containing metal oxide called a positive electrode active material is arranged on an electrode. To reduce the cost of the positive electrode and the cost of a battery, cost reduction in the positive electrode active material is inevitable.

Currently, as a positive electrode active material for a lithium ion battery, much attention has been paid to a nickel-based active material from which high capacity can be expected. One typical example of the nickel-based active material is a composite metal oxide (LNCAO) containing not only lithium and nickel but also cobalt and aluminum. As a lithium source of the nickel-based active material such as LNCAO, lithium hydroxide is used.

The present inventors have disclosed an LNCAO-based positive electrode active material for a lithium ion battery, which is manufactured by using lithium hydroxide as a raw material, and a method of manufacturing the same in Japanese Patent Application Nos. 2014-174149, 2014-174150, and 2014-0174151 (Patent Documents 1, 2, and 3). In a firing step of the manufacturing method, nickel hydroxide and lithium hydroxide, which are major raw materials, produce a composite oxide (LNO) containing lithium and nickel through a reaction represented by the following formula.

(Manufacturing of LNO by Using Nickel Hydroxide and Lithium Hydroxide as Raw Materials)

$$4Ni(OH)_2 + 4LiOH + O_2 \rightarrow 4LiNiO_2 + 6H_2O$$

However, a nickel-based active material such as LNCAO is manufactured by using lithium hydroxide as a lithium source (Non-Patent Document 1). Lithium hydroxide is industrially synthesized solely through a reaction represented by the following formula by using lithium carbonate as a raw material (Non-Patent Document 2). Of course, the price of lithium hydroxide is higher than the price of lithium carbonate which is a raw material of lithium hydroxide.

(Manufacturing of Lithium Hydroxide by Using Lithium Carbonate as Raw Material)

$$Li_2CO_3 \text{ (Aqueous Solution)} + Ca(OH)_2 \text{ (Aqueous Solution)} \rightarrow 2LiOH \text{ (Aqueous Solution)} + CaCO_3 \text{ (Solid)}$$

As described above, the demand for performance improvement and cost reduction in a lithium ion battery has increased. In addition, performance improvement and cost reduction are also required in respective members of a lithium ion battery and materials constituting the respective members. Likewise, in the positive electrode active material containing LNO, performance improvement and cost reduction are required.

When LNO is synthesized by using inexpensive lithium carbonate ($Li_2CO_3$) as a starting material, it is expected that the manufacturing cost of a positive electrode active material containing LNO can be reduced. A decomposition reaction of lithium carbonate into lithium oxide and/or lithium hydroxide and a reaction between lithium oxide and/or lithium hydroxide and a nickel compound can be consistently performed in theory. A series of reactions may be performed at a high temperature at which the decomposition reaction of lithium carbonate into lithium oxide and/or lithium hydroxide can be performed.

In order to manufacture not a nickel-based positive electrode active material but a cobalt-based positive electrode active material, lithium carbonate is used as a lithium source (Non-Patent Document 1). Lithium cobalt oxide (LCO) which is a typical example of a cobalt-based positive electrode active material can be synthesized by mixing lithium carbonate and cobalt oxide and/or cobalt hydroxide, which are raw materials, with each other and firing the mixture at a firing temperature of about 1000°C. It is considered that, in this synthesis process, the decomposition reaction of lithium carbonate into lithium oxide and/or lithium hydroxide occurs.

For example, in order to manufacture a nickel-cobalt-manganese ternary active material (NCM), lithium carbonate is used as a lithium source (Non-Patent Document 1). Since it is necessary that the firing temperature is increased to about a decomposition temperature of lithium carbonate, NCM is manufactured by being fired at a high temperature of 900°C or higher.

However, there are few examples in which lithium carbonate is used as a lithium source to manufacture a nickel-based active material such as LNO. The reason for this is that the thermal stability of a nickel-based active material is extremely lower than that of a cobalt-based active material. A layered structure of a cobalt-based positive electrode active material is more stable than a layered structure of an LNO-type composite oxide. Therefore, as described in Patent Document 4, lithium carbonate can be used as a lithium source of a cobalt-based positive electrode active material.

In a reaction at a high temperature, the thermodynamic energy in the reaction system increases. Therefore, it is considered that crystal structures of various composite oxides to be produced become disordered. Specifically, in the layered structure of LNO, ions in the 3a site (layer of lithium ions) and ions in the 3c site (layer of nickel ions) exchange with each other due to thermal vibration at a high temperature, which causes so-called cation mixing in which nickel penetrates into the lithium layer and lithium penetrates into the nickel layer. Accordingly, the performance of the obtained positive electrode active material decreases, and it has been expected that the positive electrode active material would have poor practicability comprehensively. This expectation is persuasive to those skilled in the art. Therefore, a method of manufacturing an LNO-type composite oxide for a positive electrode active material for a lithium ion battery by using lithium carbonate as a raw material has not yet been studied.

[Related art Document]

[Patent Document]

[Patent Document 1] Japanese Patent Application No. 2014-174149
[Patent Document 2] Japanese Patent Application No. 2014-174150
[Patent Document 3] Japanese Patent Application No. 2014-174151
[Patent Document 4] PCT International Publication No. 2009/060603

[Non-Patent Document]

[Non-Patent Document 1] Japan Oil, Gas and Metals National Corporation, Annual Report 2012, pp. 148 to 154 [Non-Patent Document 2] "Monthly Fine Chemicals" November, 2009, pp. 81 to 82, CMC Publishing

[Summary of the Invention]

[Problem that the Invention is to Solve]

In order to realize performance improvement and cost reduction in a positive electrode active material for a lithium ion battery, the present inventors improved the configurations already proposed: a nickel-based positive electrode active material manufactured by using lithium hydroxide as a raw material; and a method of manufacturing the same.

[Means for solving the problem]

As a result, a method was found capable of maintaining the performance of a positive electrode active material even when lithium carbonate is used as a lithium source contrary to the conventional common knowledge. By selecting a firing operation under special conditions where a manufacturing method according to the present invention is adopted, surprisingly, the disorder of a layered structure caused by cation mixing, which has been considered to be inevitable in the related art, can be avoided and repaired.

That is, the present invention is as follows.

(Invention 1) A method of manufacturing a lithium nickel composite oxide, the method including:

the following steps 1 to 7,
in which lithium carbonate is used as a lithium source, and
the lithium nickel composite oxide is represented by the following Formula (1):

$$Li_x Ni_{1-y-z} Co_y M_z O_{1.7-2.2} \cdots \qquad (1)$$

(in Formula (1), $0.90<x<1.10$, $0.01<y<0.15$, $0.005<z<0.10$, and M represents one or more metals selected from the group consisting of Al, Mn, W, Nb, Mg, Zr, and Zn),
the steps 1 to 7 including:

(Step 1) a dissolving step of dissolving nickel sulfate and cobalt sulfate in water to prepare a nickel sulfate aqueous solution and a cobalt sulfate aqueous solution;
(Step 2) a precipitation step of mixing the nickel sulfate aqueous solution and the cobalt sulfate aqueous solution, which are obtained in Step 1, with each other and adding an alkali aqueous solution to prepare a coprecipitate of nickel hydroxide and cobalt hydroxide;
(Step 3) a filtering step of obtaining a precursor cake containing nickel hydroxide and cobalt hydroxide from the coprecipitate which is obtained in Step 2;
(Step 4) a drying step of drying the precursor cake, which is obtained in Step 3, to obtain precursor powder;
(Step 5) a mixing step of mixing aluminum hydroxide and lithium carbonate with the precursor powder, which is obtained in Step 4, to obtain a mixture;
(Step 6) a high-temperature firing step of firing the mixture, which is obtained in Step 5, at a high temperature of higher than 790°C to obtain a fired product; and
(Step 7) a low-temperature firing step of firing the fired product, which has undergone Step 6, at a low temperature of lower than 790°C.

(Invention 2) The method according to Invention 1,
wherein in Step 7, lithium atoms and nickel atoms are rearranged such that uniform crystal layers are recovered.
(Invention 3) The method according to Invention 1 or 2,
in which a firing temperature of Step 6 is higher than 790°C and 900°C or lower.
(Invention 4) The method according to any one of Inventions 1 to 3,
in which a firing temperature of Step 7 is 700°C or higher and lower than 790°C.
(Invention 5) The method according to any one of Inventions 1 to 4 further including:
a crushing step (Step 8) of crushing, after Step 7, aggregated particles of the lithium nickel composite oxide which is obtained in Step 7.
(Invention 6) A lithium nickel composite oxide which is obtained using the method according to any one of Inventions 1 to 5.
(Invention 7) The lithium nickel composite oxide according to Invention 6,
in which a hydrogen ion concentration in a supernatant in which 2 g of the lithium nickel composite oxide is dispersed in 100 g of water is 11.65 or lower in terms of pH.
(Invention 8) A positive electrode active material including:
the lithium nickel composite oxide according to any one of Inventions 6 to 7.
(Invention 9) A positive electrode mixture for a lithium ion battery, the positive electrode mixture including:
the positive electrode active material according to Invention 8.
(Invention 10) A positive electrode for a lithium ion battery which is manufactured using the positive electrode mixture for a lithium ion battery according to Invention 9.
(Invention 11) A lithium ion battery including:
the positive electrode for a lithium ion battery according to Invention 10.

[Advantage of the Invention]

In the method according to the present invention, as a lithium source for a positive electrode active material, lithium carbonate is used and is less expensive than lithium hydroxide which has been solely used in the related art. As a result, the manufacturing cost of a positive electrode active material can be significantly reduced. However, surprisingly, the performance of the positive electrode active material, which is obtained using the manufacturing method according to the present invention is equivalent to or higher than the performance of a positive electrode active material which is obtained using the method of the related art. In this way, according to the present invention, there is provided a method of manufacturing a high-performance and low-cost nickel-based positive electrode active material in which lithium carbonate is used as a lithium source.

[Brief Description of the Drawings]

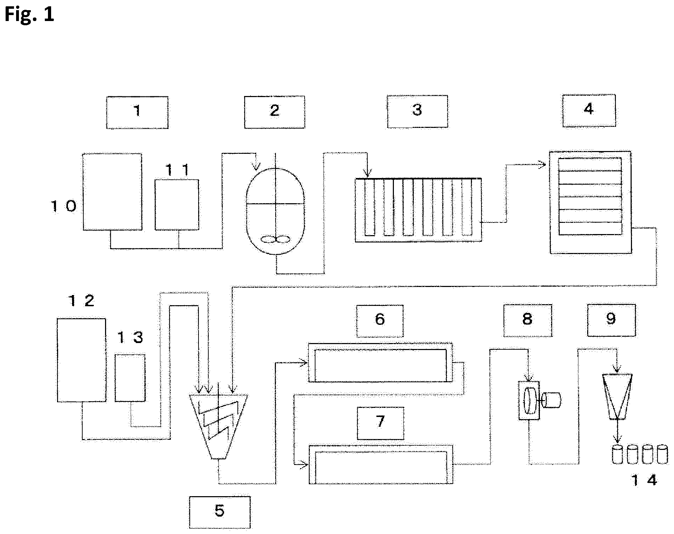

Fig. 1 is a flow chart schematically showing a manufacturing method according to the present invention.

[Best Mode for Carrying Out the Invention]

In a manufacturing method according to the present invention, a lithium nickel composite oxide represented by the following Formula (1) is obtained. In Formula (1), M represents Al or an Al alloy containing Al and a small amount of one or more metals selected from the group consisting of Mn, W, Nb, Mg, Zr, and Zn. The amount of one or more metals selected from the group consisting of Mn, W, Nb, Mg, Zr, and Zn may be adjusted within a range where the lithium nickel composite oxide represented by Formula (1) functions as a nickel-based positive electrode active material. The time at which the one or more metals selected from the group consisting of Mn, W, Nb, Mg, Zr, and Zn is supplied to the lithium nickel composite oxide may be any one of steps in the manufacturing method according to the present invention. For example, the metals may be supplied as impurities contained in raw materials, may be supplied as auxiliary components in Steps 1 to 7 which are essential steps, or may be supplied in an arbitrary step.

$$Li_x Ni_{1-y-z} Co_y M_z O_{1.7-2.2} \cdots \qquad (1)$$

(in Formula (1), $0.90 < x < 1.10$, $0.01 < y < 0.15$, $0.005 < z < 0.10$, and M represents one or more metals selected from the group consisting of Al, Mn, W, Nb, Mg, Zr, and Zn)

Steps 1 to 8 of the manufacturing method according to the present invention will be described. Steps 1 to 7 described below are essential steps in the manufacturing method according to the present invention. Step 8 described below is an optional step provided after Steps 1 to 7. In order to simply describe operations of the respective steps and chemical reactions occurring in the respective steps, a case where M in Formula (1) represents Al will be described.

(Step 1)

Step 1 is a dissolving step of dissolving nickel sulfate and cobalt sulfate in water to prepare a nickel sulfate aqueous solution and a cobalt sulfate aqueous solution. In Step 1, nickel sulfate and cobalt sulfate are dissolved in water contained in separate containers to prepare a nickel sulfate aqueous solution and a cobalt sulfate aqueous solution.

(Step 2)

Step 2 is a precipitation step of mixing the nickel sulfate aqueous solution and the cobalt sulfate aqueous solution, which are obtained in Step 1, with each other to prepare a coprecipitate of nickel hydroxide and cobalt hydroxide. The nickel sulfate aqueous solution and the cobalt sulfate aqueous solution obtained in Step 1 are respectively weighed and are introduced into one container together with an appropriate amount of a precipitant to mix these components with each other. In general, the components are mixed in a precipitation tank equipped with a stirrer. As the precipitant, an alkali aqueous solution is used. A general precipitant is a mixture of sodium hydroxide and ammonium water. By sufficiently mixing the components with each other, a coprecipitate of nickel hydroxide and cobalt hydroxide is produced.

(Step 3)

Step 3 is a filtering step of obtaining a precursor cake containing nickel hydroxide and cobalt hydroxide from the coprecipitate which is obtained in Step 2. In Step 3, first, in Step 2, a solid mixture cake of nickel hydroxide and cobalt hydroxide is separated out by causing the content in the container to pass through a filter. Next, the separated mixture cake is washed with pure water to remove dissolved salt components. In this way, a precursor cake containing metal hydroxides, which are precursors of the lithium nickel composite oxide, is obtained. The precursor cake obtained in Step 3 contains water.

(Step 4)

Step 4 is a drying step of drying the precursor cake, which is obtained in Step 3, to obtain precursor powder. When the amount of water contained in the precursor is 1 wt% or lower, the drying is finished. A drying method may be, for example, hot-air drying under the atmospheric pressure, infrared drying, or vacuum drying. By using vacuum drying, the precursor cake can be dried within a short period of time. The precursor cake containing water obtained in Step 3 is converted into powder after Step 4.

(Step 5)

Step 5 is a mixing step of mixing aluminum hydroxide and lithium carbonate with the precursor powder, which is obtained in Step 4, to obtain a mixture. In a method in the related art of manufacturing the lithium nickel composite oxide represented by Formula (1), lithium hydroxide is mixed with precursor powder containing nickel hydroxide and cobalt hydroxide. In the present invention, unlike the method in the related art, lithium carbonate is mixed with precursor powder containing nickel hydroxide and cobalt hydroxide, in which lithium carbonate is a raw material of lithium hydroxide, has a lower price per unit weight than lithium hydroxide, and has a higher lithium content per unit weight than lithium hydroxide monohydrate. The components are mixed with each other by applying a shearing force using various mixers.

(Step 6)

Step 6 is a high-temperature firing step of firing the mixture, which is obtained in Step 5, at a high temperature of higher than 790°C (preferably higher than 790°C and 900°C or lower, and more preferably 800°C to 850°C) to obtain a fired product. The firing of Step 6 is performed in the presence of oxygen. The firing time of Step 6 is typically 3 hours to 18 hours and preferably 4 hours to 12 hours. It is considered that, at a high temperature of higher than 790°C, lithium carbonate is decomposed into lithium oxide and/or lithium hydroxide. It is presumed that, as the decomposition reaction, the following two reactions simultaneously progress.

$$\text{(Decomposition Reaction) } Li_2CO_3 \text{ (Heating)} \rightarrow Li_2O \text{ (Lithium Oxide)} + CO_2$$

$$\text{(Decomposition Reaction) } Li_2CO_3 + H_2O \text{ (Heating)} \rightarrow 2LiOH \text{ (Lithium Hydroxide)} + CO_2$$

It is considered that lithium oxide and lithium hydroxide produced through the above-described decomposition reaction react as follows with nickel hydroxide contained in the precursor to produce the lithium nickel composite oxide.

$$2Ni(OH)_2 + Li_2O + 1/2\ O_2 \rightarrow 2LiNiO_2 + H_2O$$

$$4Ni(OH)_2 + 4LiOH + O_2 \rightarrow 4LiNiO_2 + 6H_2O$$

It is presumed that, due to thermal vibration at a temperature of higher than 800°C, lithium ions and nickel ions, specifically, in LNO produced in Step 6, lithium atoms and nickel atoms move between crystal layers to be in a state where the uniformity of the respective crystal layers is poor (so-called, a cation mixing state).

In addition, lithium oxide and lithium hydroxide produced through the above-described decomposition reaction react as follows with cobalt hydroxide contained in the precursor.

$$2Co(OH)_2 + Li_2O + 1/2\ O_2 \rightarrow 2LiCoO_2 + H_2O$$

$$4Co(OH)_2 + 4LiOH + O_2 \rightarrow 4LiCoO_2 + 6H_2O$$

In addition, lithium oxide and lithium hydroxide produced through the above-described decomposition reaction react as follows with aluminum hydroxide contained in the precursor.

$$2Al(OH)_3 + Li_2O \rightarrow 2LiAlO_2 + 3H_2O$$

$$Al(OH)_3 + LiOH \rightarrow LiAlO_2 + 2H_2O$$

In this way, the precursor is converted into the lithium nickel composite oxide represented by the following Formula (1).

$$Li_xNi_{1-y-z}Co_yM_zO_{1.7-2.2} \qquad (1)$$

(in Formula (1), $0.90 < x < 1.10$, $0.01 < y < 0.15$, $0.005 < z < 0.10$, and M represents one or more metals selected from the group consisting of Al, Mn, W, Nb, Mg, Zr, and Zn)

(Step 7)

Step 7 is a low-temperature firing step of firing the fired product, which has undergone Step 6, at a temperature of lower than 790°C (preferably 700°C or higher and lower than 790°C, and more preferably 720°C or higher and lower than 790°C) to obtain a fired product. The firing of Step 7 is performed in the presence of oxygen. The firing time of Step 7 is typically 3 hours to 12 hours and preferably 4 hours to 10 hours. Step 7 can be continuously performed after Step 6. That is, when the firing of Step 6 is finished, the process proceeds to the firing of Step 7 by the firing temperature being decreased to the low-temperature firing temperature.

As can be seen from Examples and Comparative Examples described below, the performance of the positive electrode active material obtained after Step 7 as a positive electrode active material, for example, low alkalinity and charge-discharge characteristics are improved as compared to a lithium nickel composite oxide of the related art which is manufactured by using lithium hydroxide as a raw material. Surprisingly, this result is contrary to the conventional common knowledge in which the disorder of LNO crystals caused by high-temperature firing, which is inevitable in the method using lithium carbonate as a raw material, is irreversible and irreparable. In Step 7, it is presumed that, in LNO produced in Step 6, lithium atoms and nickel atoms are rearranged such that the uniformity of crystal layers constituting LNO is recovered (so-called recrystallized).

After Step 7, the lithium nickel composite oxide desired in the present invention is obtained. The obtained lithium nickel composite oxide is cooled, and the grain size thereof is optionally adjusted in the following Step 8. Next, the lithium nickel composite oxide is packaged and shipped.

(Step 8)

Step 8 is a crushing step of crushing aggregated particles of the lithium nickel composite oxide which is obtained in Step 7. Step 8 is optionally performed after Step 7. In Step 8, aggregated particles of the fired lithium nickel composite oxide powder having low alkalinity are crushed using a crusher such as a jet mill. When the lithium nickel composite oxide which is appropriately refined is used, a uniform positive electrode mixture slurry having superior coating properties is obtained. Using the positive electrode mixture slurry, the production efficiency of the positive electrode can be improved. Further, the ion emission of the positive electrode active material is also stabilized, and battery performance is improved.

Through Steps 1 to 7 or through Steps 1 to 8, a fine granular lithium nickel composite oxide is obtained. The median size of the particles is approximately 20 $\mu$m or less and typically within a range of 5 $\mu$m to 10 $\mu$m.

Regarding the lithium nickel composite oxide obtained using the manufacturing method according to the present invention, a hydrogen ion concentration in a supernatant in which 2 g of the lithium nickel composite oxide is dispersed in 100 g of water is 11.65 or lower in terms of pH. That is, it can be said that the positive electrode active material for a lithium ion battery has low alkalinity. The lithium nickel composite oxide according to the present invention exhibiting low alkalinity has low reactivity with PVDF contained in the positive electrode mixture slurry for a lithium ion battery as a binder. Therefore, when the lithium nickel composite oxide according to the present invention is used as a positive electrode active material, the gelation of the positive electrode mixture slurry is not likely to occur during the preparation of the positive electrode, and the adhesion between the positive electrode mixture slurry and the electrode does not deteriorate.

The lithium nickel composite oxide obtained using the manufacturing method according to the present invention has superior charge-discharge characteristics. The 0.1 C discharge capacity is 175 mAh/g or higher, and the initial charge-discharge efficiency is 83% or higher.

According to the present invention, the lithium nickel composite oxide can be provided which has improved performance as a positive electrode active material for a lithium ion battery and has low cost.

The lithium nickel composite oxide according to the present invention is preferable as a positive electrode active material for a lithium ion battery. A positive electrode active material for a lithium ion battery may consist of the lithium nickel composite oxide powder according to the present invention or may be obtained by mixing another lithium nickel composite oxide with the lithium nickel composite oxide powder according to the present invention. For example, a positive electrode active material may be obtained by mixing 50 parts by mass of another positive electrode active material for a lithium ion secondary battery other than the composite oxide according to the present invention with 50 parts by mass of the lithium nickel composite oxide powder having low alkalinity according to the present invention. A positive electrode for a lithium ion battery is manufactured by adding a positive electrode active material containing the lithium nickel composite oxide powder according to the present invention, a conductive auxiliary agent, a binder, and an organic solvent for dispersing to prepare a positive electrode mixture slurry and coating an electrode with the positive electrode mixture slurry.

[Examples]

(Example 1)

Example 1 is a specific example of the manufacturing method according to the present invention. A precursor powder containing nickel hydroxide and cobalt hydroxide was manufactured in the following procedure.

(Step 1)

Nickel sulfate was dissolved in water contained in a dissolver to prepare a 20 wt% nickel sulfate aqueous solution. Cobalt sulfate was dissolved in water contained in another dissolver to prepare a 20 wt% cobalt sulfate aqueous solution.

(Step 2)

The 20 wt% nickel sulfate aqueous solution and the 20 wt% cobalt sulfate aqueous solution were continuously poured into a precipitation tank equipped with a stirrer at a supply ratio of 701 g/h:133 g/h (nickel sulfate aqueous solution:cobalt sulfate aqueous solution). Therefore, a 48 wt% sodium hydroxide aqueous solution and 3.8 wt% ammonium water were continuously poured into the precipitation tank at a supply ratio of 199 g/h:334 g/h (sodium hydroxide aqueous solution:ammonium water) to prepare a coprecipitate of nickel hydroxide and cobalt hydroxide.

(Step 3)

A mixture cake containing a coprecipitate of nickel hydroxide and cobalt hydroxide was separated out by causing the content in the precipitation tank to pass through a filter and was washed with pure water. As a result, a precursor cake containing nickel hydroxide and cobalt hydroxide was obtained.

(Step 4)

The precursor cake obtained in Step 3 was dried in a vacuum until the water content was 0.9 mass%. As a result, precursor powder was obtained.

(Step 5)

In a mixer, aluminum hydroxide and lithium carbonate were mixed with the precursor powder obtained in Step 4 under shearing conditions. Aluminum hydroxide was added to the mixer such that the amount of aluminum hydroxide was 5 mol% with respect to the amount of the precursor.

(Step 6)

The mixture obtained in Step 5 was fired in dry oxygen at 850°C for 5 hours.

(Step 7)

The fired product having undergone Step 6 was further fired in dry oxygen at 750°C for 5 hours. As a result, the lithium nickel composite oxide according to the present invention was obtained.
The alkalinity of the obtained lithium nickel composite oxide was evaluated using the following method. (pH at 25°C)
2 g of the obtained lithium nickel composite oxide was dispersed in 100 g of water at 25°C and was stirred on a magnetic stirrer for 3 minutes. Next, the hydrogen ion concentration (pH) was measured during filtration. The measurement results are shown in Table 1.
However, when a nickel-based positive electrode active material is charged and discharged, oxidation and reduction of transition metals are performed through a reversible reaction between a trivalent positive ion state (discharged state, hereinafter, abbreviated as "M3+") and a tetravalent positive ion state (charged state, hereinafter, abbreviated as "M4+") of the positive electrode active material. Here, when a large amount of positive divalent ions (hereinafter, abbreviated as "M2+") of nickel or cobalt, which does not contribute to charging and discharging, is present as well in the active material, there is an adverse effect on the charge-discharge performance of the battery. Therefore, it is preferable that the positive electrode active material contains a large amount of M3+.

In particular, when a nickel-based positive electrode active material is manufactured by using lithium carbonate as a lithium source, as described above, high-temperature firing is necessary to decompose lithium carbonate. In addition, as described above, cation mixing caused by high-temperature firing has an adverse effect on battery performance. It is expected that nickel in which cation mixing occurs will be present in the M2+ state in the 3a site (lithium ion site).

Therefore, in order to evaluate the potential of the obtained lithium nickel composite oxide as a positive electrode active material, the extent of the M3+ state was measured and calculated based on the following criteria A to E.

The calculation results are shown in Table 1. When M represents iron atoms, the divalent positive ion state and the trivalent positive ion state are represented by "Fe2+" and "Fe3+".

(A. Preparation of 0.1 M Iron (II) Ammonium Sulfate)

1. 300 mL of pure water was added to a 1000 mL glass bottle.
2. 50 ml of sulfuric acid was added, and the mixture was cooled to room temperature.
3. 40 g (0.1 M) of iron ammonium sulfate hexahydrate was added and dissolved.
4. After filtration, the filtrate was put into a 1 L measuring flask and was diluted to 1 L in the measuring flask.

(B Preparation of Blank)

25 ml of the solution of A was added into an Erlenmeyer flask using a volumetric pipette, and 50 ml of water was added to prepare a blank solution.

(C. Preparation of Titrand)

1. 100 mg of a sample was weighed into a 100 ml beaker.
2. 25 ml of the solution of A was added to the beaker of 1 using a volumetric pipette, and 50 ml of water was further added.
3. A stirring bar was added to the beaker, the beaker was covered with a cover, and the solution was stirred with a stirrer to dissolve the components (required time: 60 minutes). At this time, when air was introduced, Fe2+ was oxidized into Fe3+ by oxygen such that the accuracy deteriorated. Therefore, the solution was stirred without using a vortex to the extent that bubbles were not formed.
4. After dissolving, the solution in the beaker was poured into an Erlenmeyer flask (was washed off using a washing bottle).

(D. Titration)

1. The blank solution of B was titrated with a 0.02 M potassium permanganate solution. The titration was performed until the violet of potassium permanganate was removed (changed into light pink).
2. The sample solution of C was titrated using the same method. The titration was finished when the same color as that at the end of the titration of the blank solution was exhibited.

(E. Calculation)

The proportion of M3+ in the sample was calculated using the following expression.

$$(M3+ \; Content)=(Titer \; (ml) \; of \; Blank-Titer \; (ml) \; of \; Sample)\times Factor \; of \; Potassium \; Permanganate \; Aqueous \; Solution\times (Nickel \; Atomic \; Weight\times Molar \; Abundance \; Ratio+Cobalt \; Atomic \; Weight\times Molar \; Abundance \; Ratio)\times 0.01/Amount \; of \; Sample \; (g)/0.58 \; (Proportion \; of \; Metal \; in \; Active \; Material)$$

Further, the results of measuring the 0.1 C discharge capacity and the charge-discharge efficiency of the obtained lithium nickel composite oxide are shown in Table 1.

(Example 2)

Example 2 is a specific example of the manufacturing method according to the present invention. Steps 1 to 5 were performed using the same method as in Example 1.

(Step 6)

The mixture obtained in Step 5 was fired in wet oxygen (saturated vapor pressure of water at 40°C) at 850°C for 5 hours. (Step 7)
The fired product having undergone Step 6 was further fired in dry oxygen at 750°C for 5 hours. As a result, the lithium nickel composite oxide according to the present invention was obtained. The evaluation results of the obtained lithium nickel composite oxide are shown in Table 1.

(Example 3)

Example 3 is a specific example of the manufacturing method according to the present invention. Steps 1 to 5 were performed using the same method as in Example 1.

(Step 6)

The mixture obtained in Step 5 was fired in dry oxygen at 850°C for 10 hours. (Step 7)
The fired product having undergone Step 6 was further fired in dry oxygen at 780°C for 5 hours. As a result, the lithium nickel composite oxide according to the present invention was obtained. The evaluation results of the obtained lithium nickel composite oxide are shown in Table 1.

(Example 4)

Example 4 is a specific example of the manufacturing method according to the present invention. Steps 1 to 4 were performed using the same method as in Example 1.

(Step 5)

In a mixer, aluminum hydroxide and lithium carbonate were mixed with the precursor powder obtained in Step 4 under shearing conditions. Aluminum hydroxide was added to the mixer such that the amount of aluminum hydroxide was 2 wt% with respect to the total amount of the precursor. (Step 6)
The mixture obtained in Step 5 was fired in dry oxygen at 850°C for 10 hours. (Step 7)
The fired product having undergone Step 6 was further fired in dry oxygen at 780°C for 5 hours. As a result, the lithium nickel composite oxide according to the present invention was obtained. The evaluation results of the obtained lithium nickel composite oxide are shown in Table 1.

(Example 5)

Example 5 is a specific example of the manufacturing method according to the present invention. Steps 1 to 5 were performed using the same method as in Example 1.

(Step 6)

The mixture obtained in Step 5 was fired in dry oxygen at 810°C for 10 hours. (Step 7)
The fired product having undergone Step 6 was further fired in dry oxygen at 780°C for 5 hours. As a result, the lithium nickel composite oxide according to the present invention was obtained. The evaluation results of the obtained lithium nickel composite oxide are shown in Table 1.

(Example 6)

Example 6 is a specific example of the manufacturing method according to the present invention. Steps 1 to 5 were performed using the same method as in Example 1.

(Step 6)

The mixture obtained in Step 5 was fired in dry oxygen at 830°C for 10 hours. (Step 7)
The fired product having undergone Step 6 was further fired in dry oxygen at 780°C for 5 hours. As a result, the lithium nickel composite oxide according to the present invention was obtained. The evaluation results of the obtained lithium nickel composite oxide are shown in Table 1.

(Comparative Example 1)

Comparative Example 1 is an example of the method of the related art in which lithium hydroxide was used as a raw material. Steps 1 to 5 were performed using the same method as in Example 1. The mixture obtained in Step 5 was fired in wet oxygen (saturated vapor pressure of water at 40°C) at 790°C for 5 hours. After the completion of firing, the fired product was naturally cooled after changing the atmosphere to dry oxygen. The evaluation results of the obtained lithium nickel composite oxide are shown in Table 1.

[Table 1]

| | | Li Source | Step 6 | | | Step 7 | | Evaluation | | | |
|---|---|---|---|---|---|---|---|---|---|---|---|
| | | | Temperature (°C) | Hours (hr) | Firing Atmosphere | Temperature (°C) | Hours (hr) | pH (Measured at 25°C) | M3+ Content | 0.1 C Discharge Capacity | Charge-Discharge Efficiency |
| Example | 1 | Lithium Carbonate | 850 | 5 | Dry Oxygen | 750 | 5 | 11.60 | 91.96 | 185 | 84.9 |
| Example | 2 | Lithium Carbonate | 850 | 5 | Wet Oxygen | 750 | 5 | 11.62 | 93.59 | 183 | 85.9 |
| Example | 3 | Lithium Carbonate | 850 | 10 | Dry Oxygen | 780 | 5 | 11.58 | 95.93 | 179 | 84.3 |
| Example | 4 | Lithium Carbonate | 850 | 10 | Dry Oxygen | 780 | 5 | 11.37 | 94.30 | 186 | 84.9 |
| Example | 5 | Lithium Carbonate | 810 | 10 | Wet Oxygen | 780 | 5 | 11.06 | 97.96 | 197 | 88.3 |
| Example | 6 | Lithium Carbonate | 830 | 10 | Wet Oxygen | 780 | 5 | 11.07 | 96.51 | 190 | 87.2 |
| Comparative Example | 1 | Lithium Hydroxide | In Wet Oxygen, 790°C, 5 hours | | | | | 11.81 | 94.44 | 174 | 82.4 |

It was found from the pH values of Table 1 that the lithium nickel composite oxide obtained in each of Examples 1 to 4 had lower alkalinity than the lithium nickel composite oxide obtained in Comparative Example 1. Further, Table 1 does not show a significant difference in the M3+ content between Examples 1 to 4 and Comparative Example 1 in which lithium hydroxide was used as a lithium source. In this way, a decrease in the potential of the lithium nickel composite oxide according to the present invention as a positive electrode active material caused by the change of the raw material was not acknowledged.

Further, the lithium nickel composite oxide obtained in each of Examples 1 to 4 had higher charge-discharge characteristics than the lithium nickel composite oxide obtained in Comparative Example 1. Accordingly, when the low alkalinity, the active metal species content, and the charge-discharge characteristics are comprehensively evaluated, it can be said that, with the manufacturing method according to the present invention in which lithium hydroxide is used as a lithium source, a superior lithium nickel composite oxide which cannot be obtained using the method of the related art can be obtained.

[Industrial Applicability]

The present invention is useful as means for supplying a high performance lithium ion battery at a low cost. The lithium nickel composite oxide obtained according to the present invention and the lithium ion battery including the lithium nickel composite oxide contribute to further cost reduction of a portable information terminal or a battery electric vehicle.

[Description of Reference Numerals and Signs]

1:      STEP 1 (DISSOLVING STEP)
2:      STEP 2 (PRECIPITATION STEP)
3:      STEP 3 (FILTERING STEP)
4:      STEP 4 (DRYING STEP)
5:      STEP 5 (MIXING STEP)
6:      STEP 6 (HIGH-TEMPERATURE FIRING STEP)
7:      STEP 7 (LOW-TEMPERATURE FIRING STEP)
8:      STEP 8 (CRUSHING STEP)
9:      CHARGING AND PACKAGING STEP
10:     NICKEL SULFATE
11:     COBALT SULFATE
12:     LITHIUM CARBONATE
13:     ALUMINUM HYDROXIDE
14:     LITHIUM NICKEL COMPOSITE OXIDE PRODUCT

Claims

1.  A method of manufacturing a lithium nickel composite oxide using lithium carbonate as a lithium source, the lithium nickel composite oxide being represented by the following Formula (1):

$$Li_xNi_{1-y-z}Co_yM_zO_{1.7-2.2} \cdots \qquad (1)$$

wherein in Formula (1), $0.90<x<1.10$, $0.01<y<0.15$, $0.005<z<0.10$, and M represents one or more metals selected from the group consisting of Al, Mn, W, Nb, Mg, Zr, and Zn), the method comprising the following steps 1 to 7:

(Step 1) a dissolving step of dissolving nickel sulfate and cobalt sulfate in water to prepare a nickel sulfate aqueous solution and a cobalt sulfate aqueous solution;
(Step 2) a precipitation step of mixing the nickel sulfate aqueous solution and the cobalt sulfate aqueous solution, which are obtained in Step 1, with each other and adding an alkali aqueous solution to prepare a coprecipitate of nickel hydroxide and cobalt hydroxide;
(Step 3) a filtering step of obtaining a precursor cake containing nickel hydroxide and cobalt hydroxide from the coprecipitate which is obtained in Step 2;

(Step 4) a drying step of drying the precursor cake, which is obtained in Step 3, to obtain precursor powder;

(Step 5) a mixing step of mixing aluminum hydroxide and lithium carbonate with the precursor powder, which is obtained in Step 4, to obtain a mixture;

(Step 6) a high-temperature firing step of firing the mixture, which is obtained in Step 5, at a high temperature of higher than 790°C to obtain a fired product; and

(Step 7) a low-temperature firing step of firing the fired product, which has undergone Step 6, at a low temperature of lower than 790°C.

2. The method according to claim 1,
   wherein in Step 7, lithium atoms and nickel atoms are rearranged such that uniform crystal layers are recovered.

3. The method according to claim 1 or 2,
   wherein a firing temperature of Step 6 is higher than 790°C and 900°C or lower.

4. The method according to any one of claims 1 to 3,
   wherein a firing temperature of Step 7 is 700°C or higher and lower than 790°C.

5. The method according to any one of claims 1 to 4 further comprising:
   a crushing step (Step 8) of crushing, after Step 7, aggregated particles of the lithium nickel composite oxide obtained in Step 7.

6. A lithium nickel composite oxide obtainable using the method according to any one of claims 1 to 5.

7. The lithium nickel composite oxide according to claim 6,
   wherein a hydrogen ion concentration in a supernatant of a dispersion of 2 g of the lithium nickel composite oxide in 100 g of water is 11.65 or lower in terms of pH.

8. A positive electrode active material comprising:
   the lithium nickel composite oxide according to any one of claims 6 to 7.

9. A positive electrode mixture for a lithium ion battery, the positive electrode mixture comprising:
   the positive electrode active material according to claim 8.

10. A positive electrode for a lithium ion battery which is manufactured using the positive electrode mixture for a lithium ion battery according to claim 9.

11. A lithium ion battery comprising:
    the positive electrode for a lithium ion battery according to claim 10.

**Patentansprüche**

1. Verfahren zur Herstellung eines Lithium-Nickel-Mischoxids unter Verwendung von Lithiumcarbonat als Lithiumquelle,
   wobei das Lithium-Nickel-Mischoxid durch die folgende Formel (1) dargestellt wird:

$$Li_xNi_{1-y-z}CO_yM_zO_{1,7-2,2} \cdots \qquad (1)$$

wobei in Formel (1) 0,90 < x < 1,10, 0,01 < y < 0,15, 0,005 < z < 0,10, und M ein oder mehrere Metalle, ausgewählt aus der Gruppe bestehend aus Al, Mn, W, Nb, Mg, Zr und Zn, bedeutet,
wobei das Verfahren die folgenden Schritte 1 bis 7 umfasst:

(Schritt 1) einen Löseschritt des Lösens von Nickelsulfat und Cobaltsulfat in Wasser, um eine wässrige Lösung von Nickelsulfat und eine wässrige Lösung von Cobaltsulfat herzustellen;

(Schritt 2) einen Fällungsschritt des Miteinandervermischens der wässrigen Lösung von Nickelsulfat und der wässrigen Lösung von Cobaltsulfat, die in Schritt 1 erhalten werden, und des Zugebens einer alkalischen wässrigen Lösung, um ein Copräzipitat von Nickelhydroxid und Cobalthydroxid herzustellen;

(Schritt 3) einen Filtrierschritt des Erhaltens eines Präkursor-Filterkuchens, der Nickelhydroxid und Cobalthydroxid enthält, aus dem Copräzipitat, das in Schritt 2 erhalten wird;

(Schritt 4) einen Trocknungsschritt des Trocknens des Präkursor-Filterkuchens, der in Schritt 3 erhalten wird, um ein Präkursor-Pulver zu erhalten;

(Schritt 5) einen Mischschritt des Mischens von Aluminiumhydroxid und Lithiumcarbonat mit dem Präkursor-Pulver, das in Schritt 4 erhalten wird, um ein Gemisch zu erhalten;

(Schritt 6) einen Hochtemperaturbrennschritt des Brennens des Gemisches, das in Schritt 5 erhalten wird, bei einer hohen Temperatur von höher als 790 °C, um ein gebranntes Produkt zu erhalten; und

(Schritt 7) einen Niedertemperaturbrennschritt des Brennens des gebrannten Produktes, das Schritt 6 durchlaufen hat, bei einer niedrigen Temperatur von niedriger als 790 °C.

2. Verfahren nach Anspruch 1,
wobei, in Schritt 7, Lithiumatome und Nickelatome umgeordnet werden, sodass homogene Kristallschichten wiederhergestellt werden.

3. Verfahren nach Anspruch 1 oder 2,
wobei eine Brenntemperatur von Schritt 6 höher als 790 °C und 900 °C oder niedriger ist.

4. Verfahren nach einem der Ansprüche 1 bis 3,
wobei eine Brenntemperatur von Schritt 7 700 °C oder höher und niedriger als 790 °C ist.

5. Verfahren nach einem der Ansprüche 1 bis 4, weiterhin umfassend:
einen Zerkleinerungsschritt (Schritt 8) des Zerkleinerns, nach Schritt 7, aggregierter Partikel des in Schritt 7 erhaltenen Lithium-Nickel-Mischoxids.

6. Lithium-Nickel-Mischoxid, erhältlich unter Verwendung des Verfahrens nach einem der Ansprüche 1 bis 5.

7. Lithium-Nickel-Mischoxid nach Anspruch 6,
wobei eine Wasserstoffionenkonzentration in einem Überstand einer Dispersion von 2 g des Lithium-Nickel-Mischoxids in 100 g Wasser 11,65 oder niedriger in Form des pH-Wertes ist.

8. Positiv-Elektroden-Aktivmaterial, umfassend:
das Lithium-Nickel-Mischoxid nach einem der Ansprüche 6 bis 7.

9. Positiv-Elektroden-Gemisch für eine Lithium-Ionen-Batterie, wobei das Positiv-Elektroden-Gemisch umfasst:
das Positiv-Elektroden-Aktivmaterial nach Anspruch 8.

10. Positive Elektrode für eine Lithium-Ionen-Batterie, die hergestellt wird unter Verwendung des Positiv-Elektroden-Gemisches für eine Lithium-Ionen-Batterie nach Anspruch 9.

11. Lithium-Ionen-Batterie, umfassend:
die positive Elektrode für eine Lithium-Ionen-Batterie nach Anspruch 10.


**Revendications**

1. Procédé de fabrication d'un oxyde composite lithium-nickel utilisant un carbonate de lithium comme source de lithium, l'oxyde composite lithium-nickel étant représenté par la Formule (1) suivante :

$$Li_xNi_{1-y-z}CO_yM_zO_{1,7-2,2} \ldots \qquad (1)$$

où, dans la Formule (1), 0,90<x<1,10, 0,01<y<0,15, 0,005<z<0,10 et M représente un ou plusieurs métaux sélectionnés dans le groupe consistant en Al, Mn, W, Nb, Mg, Zr et Zn,
le procédé comprenant les étapes 1 à 7 suivantes :

(Étape 1) une étape de dissolution consistant à dissoudre du sulfate de nickel et du sulfate de cobalt dans de l'eau pour préparer une solution aqueuse de sulfate de nickel et une solution aqueuse de sulfate de cobalt ;
(Étape 2) une étape de précipitation consistant à mélanger l'une avec l'autre la solution aqueuse de sulfate de nickel et la solution aqueuse de sulfate de cobalt obtenues à l'Étape 1 et à ajouter une solution aqueuse d'un alcalin pour préparer un co-précipité d'hydroxyde de nickel et d'hydroxyde de cobalt ;

(Étape 3) une étape de filtration pour obtenir un gâteau précurseur contenant l'hydroxyde de nickel et l'hydroxyde de cobalt à partir du co-précipité obtenu à l'Étape 2 ;

(Étape 4) une étape de séchage pour sécher le gâteau précurseur obtenu à l'Étape 3 afin d'obtenir une poudre précurseur ;

(Étape 5) une étape de mélange pour mélanger de l'hydroxyde d'aluminium et un carbonate de lithium avec la poudre précurseur obtenue à l'Étape 4 afin d'obtenir un mélange ;

(Étape 6) une étape de cuisson à haute température consistant à cuire le mélange obtenu à l'Étape 5 à une température élevée supérieure à 790 °C pour obtenir un produit cuit ; et

(Étape 7) une étape de cuisson à basse température consistant à cuire le produit cuit qui a été soumis à l'Étape 6 à une température basse inférieure à 790 °C.

2. Procédé selon la revendication 1,
où, à l'Étape 7, les atomes de lithium et les atomes de nickel sont réarrangés de sorte que des couches cristallines uniformes sont récupérées.

3. Procédé selon la revendication 1 ou 2,
où une température de cuisson de l'Étape 6 est supérieure à 790 °C et inférieure ou égale à 900 °C.

4. Procédé selon l'une quelconque des revendications 1 à 3,
où une température de cuisson de l'Étape 7 est égale ou supérieure à 700 °C et inférieure à 790 °C.

5. Procédé selon l'une quelconque des revendications 1 à 4, qui comprend en outre :
une étape de broyage (Étape 8) consistant à broyer, après l'Étape 7, les particules agrégées de l'oxyde composite lithium-nickel obtenu à l'Étape 7.

6. Oxyde composite lithium-nickel pouvant être obtenu en utilisant le procédé selon l'une quelconque des revendications 1 à 5.

7. Oxyde composite lithium-nickel selon la revendication 6,
où une concentration en ion hydrogène dans un surnageant d'une dispersion de 2 g de l'oxyde composite lithium-nickel dans 100 g d'eau est inférieure ou égale à 11,65 en termes de pH.

8. Matériau actif pour électrode positive comprenant :
l'oxyde composite lithium-nickel selon l'une quelconque des revendications 6 à 7.

9. Mélange pour électrode positive pour batterie à ions lithium, le mélange pour électrode positive comprenant :
le matériau actif pour électrode positive selon la revendication 8.

10. Électrode positive pour batterie à ions lithium qui est fabriquée en utilisant le mélange pour électrode positive pour batterie à ions lithium selon la revendication 9.

11. Batterie à ions lithium comprenant :
l'électrode positive pour batterie à ions lithium selon la revendication 10.

**Fig. 1**

## REFERENCES CITED IN THE DESCRIPTION

**Patent documents cited in the description**

- JP 2014174149 A
- JP 2014174150 A
- JP 2014174151 A
- JP 2009060603 W

**Non-patent literature cited in the description**

- Annual Report. Japan Oil, Gas and Metals National Corporation, 2012, 148-154
- Monthly Fine Chemicals. CMC Publishing, November 2009, 81-82